# EUROPEAN PATENT APPLICATION

(11) **EP 2 672 445 A1**
(43) Date of publication of application: **11.12.2013**
(21) Application number: 13305749.7
(22) Date of filing: 04.06.2013
(51) Int. Cl.: G06Q 30/06, G06Q 10/04

(54) **Method, system and computer program for assigning an assortment of products to an existing planogram**

(30) Priority: 04.06.2012 US 201261654959 P
(71) Applicant: CVDM Solutions, 75020 Paris (FR)
(72) Inventor: Auclair, Adrien, 75010 Paris (FR); Guillerot, Adrien, 75014 Paris (FR)
(74) Representative: Bonnet, Michel

(57) **Abstract**

This method comprises the following steps: providing (210) with an existing planogram which includes an existing assortment of products in association with a geometrical placement layout of these products on shelves; providing (210) with a user-defined new assortment of products; furnishing an output planogram by removing (240), from the output planogram, products which are in the existing assortment but not in the new assortment and adding (250), to the output planogram, products which are in the new assortment but not in the existing assortment; storing (260) said output planogram in memory.

The method further comprises: generating (220) a set of at least one segmentation tree which describes the relative geometrical placement of products in the existing planogram according to several ordered category types, each category type corresponding to a level of said at least one segmentation tree; adding (250) the new products to the output planogram using the generated set of at least one segmentation tree.

## Description

The invention relates to a method for assigning an assortment of products to an existing planogram. It also relates to corresponding system and computer program.

### BACKGROUND OF THE INVENTION

It relates generally to the field of retail merchandising, and more specifically to the automated production of store-specific product placement within shelving areas using an existing planogram and a corresponding existing assortment of products.

A planogram can be defined as a diagram or model that indicates the geometrical placement of retail products on shelves in order to maximize sales. Therefore, a planogram includes an assortment of products in association with a geometrical placement layout of these products on shelves.

Conventional space and category management and planning systems are used to specify the location and placement of products within a retail space or store, such as, for example, a supermarket, a consumer electronic retail store, or the like. Retailers expend great time and effort in considering where and how to place products on the limited store shelves. The profitability of the store is in part dependent on an optimal placement of products for perusal by customers. If a customer cannot find a product, or a product does not catch his or her eyes, or if there is insufficient stock on a shelf to meet demand, then a sale may be lost. Retailers must make products available, appealing, and easy to find in order to maximize sales. Merchandising, in the sense of product placement, must be continuously updated with shifts in consumer buying habits, seasonal rotation, and new product offerings.

Manufacturers and distributors compete intensely for desirable shelving locations and maximum facings (number of rows of product facing the customer). Retailers are careful to place high-volume, high-profit-margin products in preferred locations, i.e., front of store, end of aisles, and eye-level shelves. With finite shelving area, each product must be allocated some number of facings to satisfy consumer demand, minimize shelf-stocking labor, and maximize visible exposure. The process of maximizing sales and profitability, given the constraints of limited shelving area and competition among suppliers for the best shelves and facings, is a very difficult, yet important issue for retailers.

A major space-management problem facing retailers and suppliers today is poor implementation of merchandising plans and an inability to react quickly to changes in consumer demand with revised shelf layouts. As mentioned above, a planogram is a product-placement layout, generated by a planning tool or computer program, which defines where products will be placed on the available store shelves, both in terms of shelf location and number of facings. Large retail chains routinely generate global or cluster planograms for local stores to implement. However, such generic planograms, which are designed to be shared across several stores, often do not accurately reflect the specific in-store fixture equipment or local customer demand for products. The global planogram may need to be adapted to the specific needs of the local store. The variability of shelving areas and/or of the product assortment between different stores often requires manual modification of the layout by the person stacking the shelf, in order to make everything fit.

Historically, planograms have been done manually, often using an existing merchandise planogram as a template. The planogram designer starts with the existing planogram and then makes the necessary changes to accommodate the new shelving format and/or product placement and/or product assortment. Other automated techniques divide the products into logical groups and then put products in sequence from top to bottom, snaking left to right across each shelf within defined horizontal limits. However, if the target product assortments or configurations vary too much between the planogram to be updated and the template, the template effectively becomes unusable. A new planogram has to be created, which defeats the purpose of the template; i.e., in reality the planogram must be started from the beginning.

Retailers continuously look for a competitive edge. A significant opportunity lays in the ability to customize the configuration of products to be more targeted to the particular store, its local specifications, product assortment evolution, and fluctuations in consumer demand. A need exists to readily adapt planograms for product placement that are customized to particular needs.

Therefore, the invention more particularly applies to a method for assigning an assortment of products to an existing planogram which comprises the following steps:
- providing with an existing planogram which includes an existing assortment of products in association with a geometrical placement layout of these products on shelves and storing said existing planogram in memory,
- providing with a user-defined new assortment of products and storing said new assortment in memory,
- furnishing, by a processor which has read/write access to the memory, an output planogram by removing, from the output planogram, products which are in the existing assortment but not in the new assortment and by adding, to the output planogram, products which are in the new assortment but not in the existing assortment, and
- storing said output planogram in memory.

### DESCRIPTION OF THE PRIOR ART

Several solutions have been proposed to automatically generate planograms specifically adapted to retail stores. For example, in US patent application publication No. US 2003/0154141 A1, a global inventory management system is presented, in which the planogram representing the current placement of the products may be automatically optimized for stock management. However, no specific method to achieve this goal is described.

In US patent application publication No. US 2006/0149634 A1 and in US patent application publication No. US 2012/0022913 A1, systems are presented to generate planograms or assortments of products, that are optimized for product placement, and using a variety of product data. However, they do not precisely describe a specific method for planogram generation.

In US patent application publication No. US 2005/0203790 A1, a planogram is automatically generated for a given retail store using input specific store data and a set of business rules. However, business rules are often subject to change and may even depend on the store. So the use of business rules may not always be practical.

In US patent application publication No. US 2007/0288296 A1, a planogram is automatically generated using an initial arrangement of products in a two-dimensional grid structure, and products are placed on a planogram compatible with store data after creating a prioritized list of products. It is a common feature of the last two cited patent application publications that they do not take advantage of a previous placement of products when generating a planogram specific to a store.

It may thus be desirable to provide a method for assigning an assortment of products to an existing planogram that at least partly dispenses with the aforementioned problems and constraints and improves on the existing methods.

### SUMMARY OF THE INVENTION

The present invention intends to provide a method to apply an assortment of products to a user-input existing planogram that specifically addresses the need of merchandising industries to apply a common assortment of products to existing planograms, so that planograms are customized to the needs of each particular retail store. In one embodiment of the present invention, a method for assigning an assortment of products to an existing planogram includes receiving user input specifying a new assortment of products and an existing planogram containing any set of products (i.e. an existing assortment of products) intersecting or not intersecting the set of products in the input new assortment. The method according to the invention then includes a step where a set of at least one segmentation tree which describes the relative geometrical placement of products in the existing planogram is created. The present invention may then allow the deletion of products in the existing planogram that are not in the new assortment. The method includes using the generated set of at least one segmentation tree mentioned previously to add products in the new assortment but not in the existing planogram.

It is therefore proposed a method for assigning an assortment of products to an existing planogram which comprises the following steps:
- providing with an existing planogram which includes an existing assortment of products in association with a geometrical placement layout of these products on shelves and storing said existing planogram in memory,
- providing with a user-defined new assortment of products and storing said new assortment in memory,
- furnishing, by a processor which has read/write access to the memory, an output planogram by removing, from the output planogram, products which are in the existing assortment but not in the new assortment and by adding, to the output planogram, products which are in the new assortment but not in the existing assortment,
- storing said output planogram in memory,
   wherein the method further comprises:
- generating, by the processor, a set of at least one segmentation tree which describes the relative geometrical placement of products in the existing planogram according to several ordered category types, each category type corresponding to a level of said at least one segmentation tree,
- adding the new products to the output planogram using the generated set of at least one segmentation tree.

Accordingly advantages of one or more aspects of the invention are as follows: providing a method for automatically adapting planograms without the need to enumerate difficult business rules and without the need to build template planograms or arrangements of products in a grid structure for the implementation of possibly implicit business rules, and for generating output planograms from an input assortment of products that are well adapted to store specific data. Generating and using a tree structure of the existing planogram makes it possible to automatically add new products at optimal places in the output planogram, and with optimal number of facings.

Optionally, adding new products to the output planogram using the generated set of at least one segmentation tree further uses optimization criteria for placement and number of facings of products on the shelves.

Optionally also, the ordered category types include at least a "segment" type which defines several geometrically segmented areas of the shelves and a "brand" type which defines several brands to which every product can be associated.

Optionally also, the output planogram is the existing planogram from which products which are in the existing assortment but not in the new assortment are directly removed and to which products which are in the new assortment but not in the existing assortment are directly added.

Optionally also, generating said at least one segmentation tree includes:
- partitioning the existing planogram into several groups, wherein each group contains one or more shelves located at the same height in the existing planogram,
- generating one segmentation tree for each group.

Optionally also, generating a segmentation tree includes creating a root node that identifies this segmentation tree and iterating over the corresponding products of the existing planogram as follows:
- for each product, determine the corresponding category values taken for each category type, and
- if there exists no node in the segmentation tree at any level such that this node and its ancestors are associated to at least part of the category values determined for the product, then create such a new node with all necessary ancestors from the root node to complete a corresponding branch of the segmentation tree and update geometrical information associated to said new node and its ancestors,
- else, update geometrical information associated to said associated node and its ancestors.

Optionally also, geometrical information is updated using placement data of the product, such as the identification of the shelf on which the product is placed, the position of the product on this shelf and the length of linear the product occupies.

Optionally also, adding the new products to the output planogram using the generated set of at least one segmentation tree includes:
- creating a subset of products in the new assortment but not in the existing assortment of existing planogram,
- associating each product of the subset to all nodes of any segmentation tree with compatible category values, and
- iteratively adding each product of the subset to the output planogram in association with an available node and updating geometrical information associated with said available node.

It is further proposed a system for assigning an assortment of products to an existing planogram comprising:
- a memory for storing:
   - an existing planogram which includes an existing assortment of products in association with a geometrical placement layout of these products on shelves,
   - a user-defined new assortment of products, and
   - an output planogram;
- a processor which has read/write access to the memory for furnishing the output planogram by:
   - removing, from the output planogram, products which are in the existing assortment but not in the new assortment,
   - adding, to the output planogram, products which are in the new assortment but not in the existing assortment,
      wherein the processor has read/write access to the memory for further:
- generating a set of at least one segmentation tree which describes the relative geometrical placement of products in the existing planogram according to several ordered category types, each category type corresponding to a level of said at least one segmentation tree,
- adding the new products to the output planogram using the generated set of at least one segmentation tree.

It is further proposed a computer program that can be downloaded from a communication network and/or saved on a computer-readable medium and/or executed by a processor, said program comprising program code instructions for the execution of the steps of a method for assigning an assortment of products to an existing planogram as defined previously, when said program is executed on a computer.

### BRIEF DESCRIPTION OF THE DRAWINGS

The invention will be better understood by means of the following description, given solely by way of example and made with reference to the accompanying drawings, in which:
- FIG. 1 illustrates a computer system with a software module for assigning an assortment of products to an existing planogram,
- FIG. 2 illustrates the successive steps of a method for assigning an assortment of products to an existing planogram, according to a preferred embodiment of the invention,
- FIG. 3 illustrates an example new assortment of products as input data for the execution of the method in FIG. 2,
- FIG. 4 illustrates an example existing planogram as input data for the execution of the method in FIG. 2,
- FIG. 5 illustrates details of a step of the method in FIG. 2, for generating a set of at least one segmentation tree,
- FIG. 6 illustrates an example segmentation tree constructed from the existing planogram illustrated in FIG. 4, after execution of the step in Fig. 5
- FIG. 7 illustrates an example method for adding new products to an output planogram using a set of at least one segmentation tree,
- FIG. 8 illustrates two example subtrees with similar nodes,
- FIG. 9 illustrates details of a step of the method in FIG. 7, for adding products of a new assortment of products to an existing planogram.

### DESCRIPTION OF THE PREFERRED EMBODIMENTS

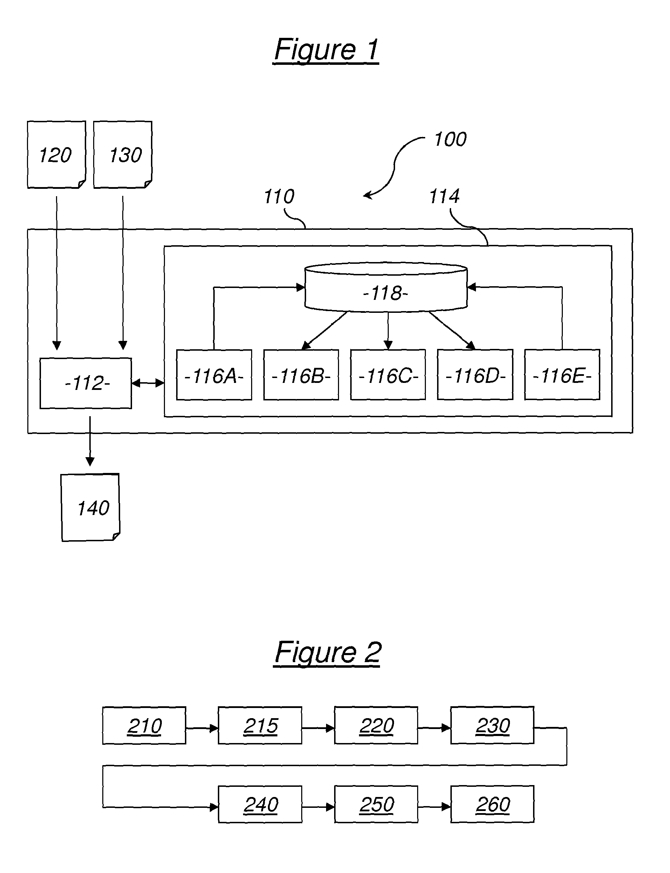

FIG. 1 illustrates a possible embodiment of a system 100 according to the invention for assigning an assortment of products to an existing planogram. This system 100 includes an assignment module 110 that receives input from a user. The input given by the user contains at least an assortment 120 of products and a planogram 130. The planogram 130 is an existing planogram which includes an existing assortment of products in association with a geometrical placement layout of these products on shelves. In a possible embodiment, the existing planogram 130 is specific to a targeted retail store and may represent the actual observed product placement in the store. The assortment 120 is a new assortment of products intersecting or not intersecting the existing assortment of products in the existing planogram 130.

The assignment module 110 processes the inputs 120 and 130 to generate an output planogram 140 which is a product-placement layout where products are taken from the new assortment 120 and where planogram geometrical constraints specific to the store are taken from the existing planogram 130.

The assignment module 110 schematically represented in FIG. 1 has a central processing unit 112 associated with a memory 114 (for example a RAM memory).

The assignment module 110 can be implemented as a software module in a computer device, such as a conventional computer that includes a microprocessor, i.e. the central processing unit 112, associated with one or more memories, i.e. the memory 114, for storing data files and instructions that are executed by the microprocessor as computer programs.

Therefore, the assignment module 110 as illustrated in FIG. 1 functionally stores five computer programs 116A, 116B, 116C, 116D and 116E or five functions of the same computer program in the memory 114. Also note that the computer programs 116A, 116B, 116C, 116D and 116E are shown as being separate, but this separation is purely functional. They may just as well be grouped into one or more software programs according to any combination. Their functions could also be at least partly micro-programmed or micro-wired in dedicated integrated circuits. Thus, alternatively, the computer device implementing the assignment module 110 could be replaced by an electronic device comprised solely of digital circuits (without a computer program) for carrying out the same actions.

The memory 114 further comprises a dedicated zone 118 for storing input and output data for and from the execution of the computer programs 116A, 116B, 116C, 116D and 116E, such as the new assortment 120, the existing planogram 130 and the output planogram 140.

The first computer program 116A includes program code instructions for the execution of storing the existing planogram 130 and the new assortment 120 in the dedicated zone 118 of the memory 114.

The second computer program 116B includes program code instructions for the execution of generating a set of at least one segmentation tree which describes the relative geometrical placement of products in the existing planogram 130 according to several ordered category types, each category type corresponding to a level of said at least one segmentation tree. These category types correspond to categories of the products both in the existing and new assortments and in the existing and output planograms. They may include at least a "segment" type which defines several geometrically segmented areas of the shelves and a "brand" type which defines several brands to which every object can be associated. In a possible embodiment, the assignment module 110 may additionnally receive the ordering information of these category types as input from the user.

The third computer program 116C includes program code instructions for the execution of removing, from the output planogram 140, products which are in the existing assortment of the existing planogram 130 but not in the new assortment 120.

The fourth computer program 116D includes program code instructions for the execution of adding, to the output planogram 140, products which are in the new assortment 120 but not in the existing assortment of the existing planogram 130, wherein adding the new products to the output planogram 140 uses the generated set of at least one segmentation tree.

Finally, the fifth computer program 116E includes program code instructions for the execution of storing the output planogram 140 in the dedicated zone 118 of the memory 114.

The method for assigning an assortment of products to an existing planogram illustrated in FIG. 2 is implemented by the system 100 previously described and comprises a first step 210 wherein the assignment module 110 receives input from a user specifying the existing planogram 130 and the new assortment of products 120.

Next step 215 consists of executing the first computer program 116A by the central processing unit 112 for storing the existing planogram 130 and the new assortment 120 in the dedicated zone 118 of the memory 114.

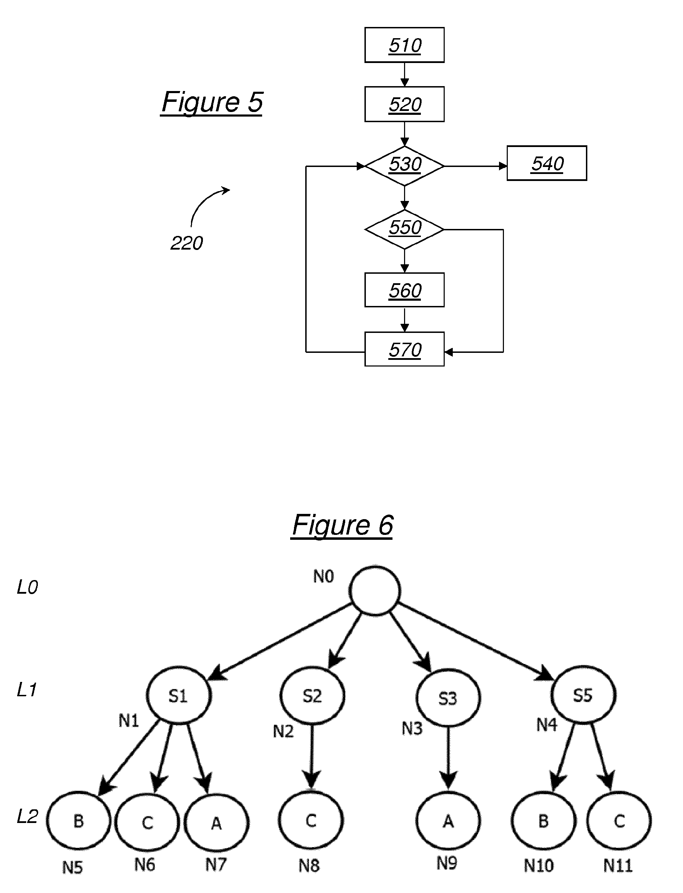

During a step 220, the second computer program 116B is executed by the central processing unit 112 for generating a set of at least one segmentation tree which describes the relative geometrical placement of products in the existing planogram 130 according to said ordered category types, for example "segment" and "brand" types. The root node of a segmentation tree identifies it. Then, each level of the identified segmentation tree corresponds to a category type, in the order defined by the ordered category types. In each level of the segmentation tree, each node corresponds to a possible category value of the category type which corresponds to this level. For example, in the case of two category types "segment" and "brand" where "segment" < "brand", a segmentation trees contains three levels. First level L0 contains the root node. Second level L1 contains nodes which correspond to possible values of category type "segment". Third level L2, which is the last level, contains leaf nodes which correspond to possible values of category type "brand". A node in the segmentation tree may contain information on category values together with geometrical information. These informations may be recorded, for instance, through a set of products as found in the existing planogram 130. Details and result of this step execution will be described with reference to FIG. 5 and 6.

During an optional step 230, the output planogram 140 is created by duplicating the existing planogram 130.

Next step 240 consists of executing the third computer program 116C by the central processing unit 112 for removing, from the output planogram 140, products which are in the existing assortment of the existing planogram 130 but not in the new assortment 120. If the number of occurrences of any product P in the new assortment 120, denoted *nₐ*(*P*), is known and also the number of occurrences of any product P in the existing assortment of the existing planogram 130, denoted *nₚ*(*P*), then when a product P is present in both the new assortment 120 and in the existing assortment of the existing planogram 130 but such that *nₐ*(*P*) < *nₚ*(*P*), *nₚ*(*P*) - *nₐ*(*P*) occurrences of P are removed from the output planogram 140. The corresponding length of linear thus removed is kept in memory, where the length of linear for a set of products is defined as the sum of their widths.

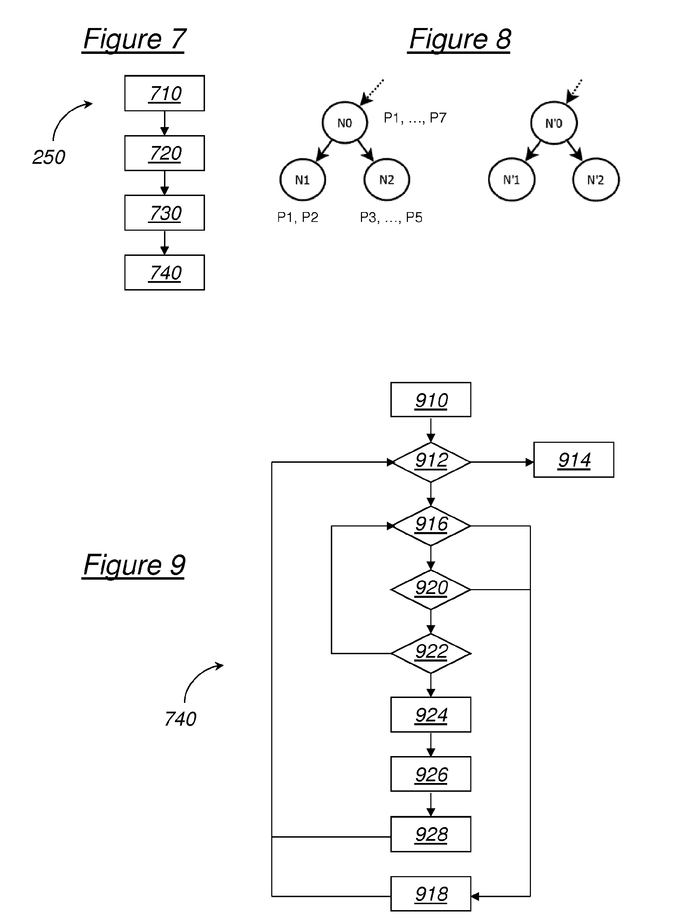

Next step 250 consists of executing the fourth computer program 116D by the central processing unit 112 for adding, to the output planogram 140, products which are in the new assortment 120 but not in the existing assortment of the existing planogram 130, wherein adding the new products to the output planogram 140 uses the set of at least one segmentation tree generated at step 220. Details of this step execution will be described with reference to FIG. 7, 8 and 9.

Final step 260 consists of executing the fifth computer program 116E by the central processing unit 112 for storing the output planogram 140 in the dedicated zone 118 of the memory 114.

Step 230 is optional because, in another embodiment, the output planogram 140 can be the existing planogram 130 from which products which are in the existing assortment but not in the new assortment 120 are directly removed and to which products which are in the new assortment 120 but not in the existing assortment are directly added. In that case, it means that the output planogram 140 is created by modifying the input planogram 130 in-place.

In another embodiment also, some of the previously detailed steps may be followed in a different order, without diverting from the scope of the present invention. For instance, in a possible embodiment, removing products at step 240 could follow the addition of products at step 250. In another possible embodiment, where step 230 is deleted and step 240 follows step 250, steps 220 and 250 can be processed together, so that segmentation trees are created as needed when adding products to the input/output planogram 130/140.

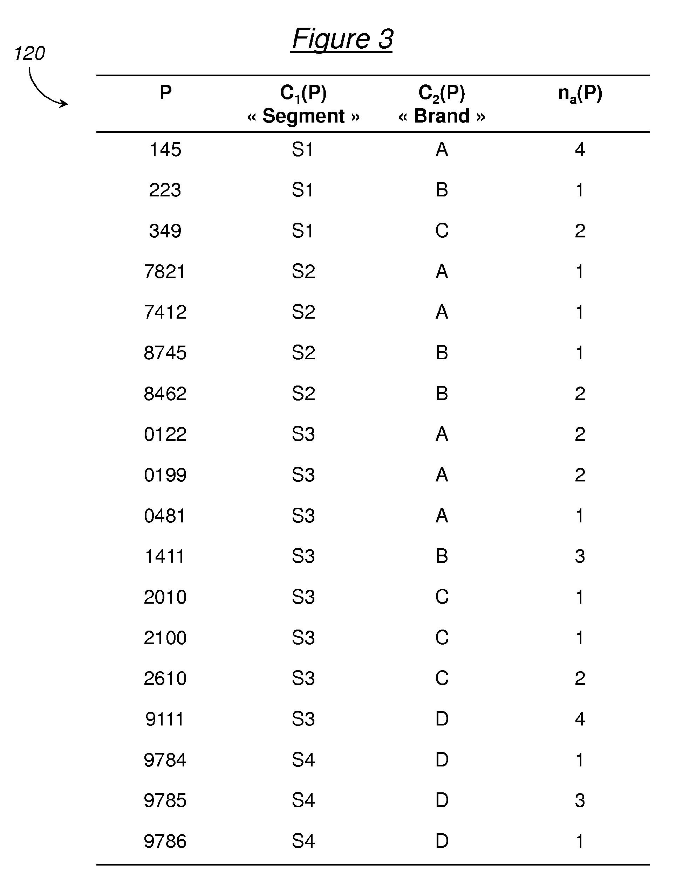

An example of new assortment 120 is shown in FIG. 3. This new assortment 120 is a finite set of products. Each product P of this finite set, identified by an identification number (such as "145", "223", ...), is characterized by a number n of category values, {*c*₁(*P*),..., *cₙ*(*P*)} ∈ *Cⁿ,* wherein each category value cᵢ(P) is selected from a finite set of possible values in a corresponding category type cᵢ. In the example of FIG. 3, two category types are defined (n = 2), c₁ = "Segment" and c₂ = "Brand" as mentioned previously. The category type c₁ = "Segment" is associated to four possible category values S1, S2, S3 and S4 while the category type c₂ = "Brand" is associated to four other category values A, B, C and D.

Optionally, variables may be defined to denote the number of times a product P appears. In that case, the number of times a product P appears in the new assortment 120 is denoted by *nₐ*(*P*) as mentioned previously.

Furthermore, each product P in the new assortment 120 has so-called geometrical properties, typically a product width.

For instance, for product P identified by identification number 145: *c*₁(*P* = 145) = *S*1, *c*₂(*P* = 145) = *A* and *nₐ*(*P* = 145) = 4; for product P identified by identification number 223: *c*₁(*P* = 223) = *S*1, *c*₂(*P* = 223) = *B* and *nₐ*(*P* = 223) = 1; etc.

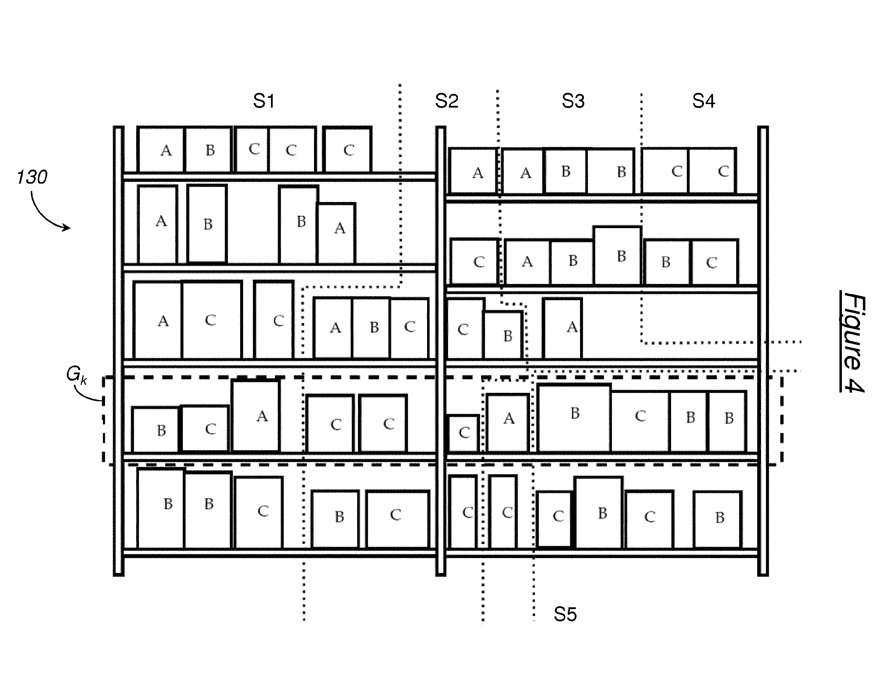

An example of existing planogram 130 is shown in FIG. 4. This existing planogram 130 includes an existing assortment of products in association with a geometrical placement layout of these products on shelves. In this existing assortment, *nₚ*(*P*) denotes the number of occurrences of product P. S1, S2, S3, S4 and S5 are five possible values of category type c₁ = "Segment". They indicate five different areas in the illustrated set of shelves delimited by dotted lines. A, B, C and D are the four possible values of category type c₂ = "Brand" to which each product P of the existing assortment can be associated. In this example, category types c₁ and c₂ are ordered such that c₁ < c₂. In more general terms, category types are ordered according to the invention such that one of the category type corresponds to each category value *c* ∈ *C*, noted *t*(*c*), and for each pair of category values (*cᵢ,cⱼ*) ∈ *C*², it is true that either *t*(*cᵢ*) = *t*(*cⱼ*) or *t*(*cᵢ*) < *t*(*cⱼ*) or *t*(*cᵢ*) > *t*(*cⱼ*), i.e. there exists an ordering defined on the set of category values C.

In addition to these values in each category type for each product P (i.e. each product P is located in one of the segments S1, S2, S3, S4, S5 and belongs to one of the brands A, B, C, D), and in addition to product P specific geometrical properties such as a width, each product P present in the existing planogram 130 has geometrical properties describing its position in the existing planogram 130 ( i.e. placement data): such geometrical properties are for instance the shelf on which it is placed, and its position on this shelf.

Optionally, the existing planogram 130 may be partitioned into K groups where a group is a set of shelves at the same height. An example group Gₖ of shelves at the same height is shown in FIG. 4. A segmentation tree is then created for each group Gₖ, based on the physical position of products on the shelves of this group and on their category values, as it will now be shown in reference with Fig. 5. K segmentation trees are thus created.

FIG. 5 illustrates details of step 220 of the method in FIG. 2 for generating a set of at least one segmentation tree from the existing planogram 130. In the example of FIG. 3, K segmentation trees are generated, one for each group Gₖ.

In the case of n category types c₁, ..., cₙ, let us consider that these category types are ordered such that c₁ < ...< cₙ. Each node N at level Lm of a segmentation tree, where m≤n, corresponds by inheritance from the root node to a list of ordered category values *C*(*N*) = {*c*₁(*P*)*,*..., *cₘ*(*P*)}. As a consequence, if N is a child of a node M, then *C*(*M*) ⊂ *C*(*N*) and *C*(*M*) has one item less (i.e. item *cₘ*(*P*)) than *C*(*N*)*.*

At a first step 510, the existing planogram 130 is partitioned into K groups Gₖ, 1≤k≤K.

Next, at step 520, for each group Gₖ, a root node N0 is created which identifies this group and its corresponding segmentation tree T(Gₖ). Then, the segmentation tree T(Gₖ) is generated by iterating over the products of the existing planogram 130 in group Gₖ.

Therefore, at following step 530, a test is performed to get next product P in group Gₖ. If there is no more product left in group Gₖ, then stop adding nodes to tree T(Gₖ) at step 540 and get next group if any.

If there is at least one product left in group Gₖ, then get next product P and a test is performed at step 550 for each category type c₁, ..., cₙ to see whether product P can be associated to at least one existing node N in the segmentation tree T(Gₖ). The test consists of looking for a node N at any level Li such that {*c*₁(*P*)*,* ..., *cᵢ*(*P*)} ⊂ *C*(*N*)*.*

If there exists no node N at any level Li such that {*c*₁(*P*), ...*, cᵢ*(*P*)} ⊂ *C*(*N*), then go to step 560 for creating such a new node with all necessary ancestors from the root node to complete the corresponding branch of the segmentation tree.

If there already exists a node N at any level Li such that {*c*₁(*P*), ...,*cᵢ*(*P*)} ⊂ *C*(*N*), or following step 560, go to step 570 for updating geometrical information associated to said node N and its ancestors. At step 570, placement data, such as the identification of the shelf on which the product P is placed, its position on this shelf and the length of linear it occupies, are used for updating such geometrical information associated to node N. Following step 570, go to step 530.

In a possible embodiment of step 220, the ordering of category types c₁, ..., cₙ may be fixed. In another possible embodiment, the ordering of category types may be decided by the user and given as input to the method. Yet in another possible embodiment, the ordering of category types may be dynamically adapted to the structure of the existing planogram 130.

As illustrated in FIG. 6, in the case of group Gₖ surrounded by dashed lines of the existing planogram 130 as illustrated in FIG. 4, and assuming that "segment" type < "brand" type, a segmentation tree with three levels L0 (for root node N0), L1 (for nodes corresponding to possible values of "segment" type) and L2 (for leaf nodes corresponding to possible values of "brand" type) is generated at step 220 while executing steps 510 to 570. In this segmentation tree, there is no node associated to segment S4 because segment S4 is absent from surrounded group Gₖ in FIG. 4. There is no child node of node N1 associated to brand D because brand D is absent from segment S1 in surrounded group Gₖ. There are no child nodes of node N2 associated to brands A, B and D because brands A, B and D are absent from segment S2 in surrounded group Gₖ. There are no child nodes of node N3 associated to brands B, C and D because brands B, C and D are absent from segment S3 in surrounded group Gₖ. And there are no child nodes of node N4 associated to brands A and D because brands A and D are absent from segment S5 in surrounded group Gₖ.

FIG. 7 illustrates details of step 250 of the method in FIG. 2 for adding, to the output planogram 140, products which are in the new assortment 120 but not in the existing assortment of the existing planogram 130. The positions where the new products are added to the output planogram 140 are derived from the segmentation trees generated at step 220.

At a first step 710, a subset A of products in the new assortment 120 but not in the existing assortment of existing planogram 130 is created, which is the subset of products in the new assortment 120 to add to the output planogram 140. Each product of subset A is associated to all nodes of any segmentation tree with compatible category values. In particular, it can happen that two different nodes N1 and N2 from two different segmentation trees share the same set of category values, i.e. C(N1) = C(N2). In that case, these nodes N1 and N2 are said to be "similar" and are both associated to the same products of subset A. For a product P in the new assortment 120, if *nₐ*(*P*) is defined and *nₐ*(*P*) > *nₚ*(*P*), then product P is in subset A. If *nₐ*(*P*) is not defined, the same rule can be used to build subset A, with *nₐ* defined as *nₐ*(*P*) = *nₚ*(*P*) if *nₚ*(*P*) > 0 and *nₐ*(*P*) = 1 otherwise. Or *nₐ*(*P*) is kept undefined and then P is in subset A only if *nₚ*(*P*) = 0.

In this first step 710, for any node N in the set of segmentation trees, a list of products from subset A with compatible categories, denoted *P*(*N*) ⊆ *A*, is created.

Let *C*(*P*) = {*c*₁(*P*)*,* ..., *cₙ*(*P*)} ∈ *Cⁿ* be the set of ordered category values of a product P. For any product P of subset A, two cases may arise:
a) there is at least one node N in the set of segmentation trees such that C(P) = C(N); then P(N) is updated such that *P*(*N*) ← *P*(*N*) ∪ {*P*}, or
b) there is no node N in the set of segmentation trees such that C(P) = C(N); then, a "best" node is found, i.e. the node N of highest level such that

*C*(*N*) ⊂ *C*(*P*) and P(N) is updated such that *P*(*N*) ← *P*(*N*) ∪ {*P*}.

Then for all nodes N' similar to N and all their ancestors, product P is added to their lists of compatible products. Formally, we can write that ∀*M* such that *C*(*M*) ⊆ *C*(*N*), *P*(*M*) ← *P*(*M*) ∪ {*P*}*.*

The segmentation trees may, or may not, be updated to add new nodes in case (b).

At a second step 720 executed for each segmentation tree, the geometric constraints of all nodes are adjusted so that room is available for all products. For example, it may consist of making sure that for each node, the length of linear available is bigger than or equal to the added length of linear available for all its children nodes. In another possible embodiment, this step may be discarded, i.e. it is assumed that all products will fit in the output planogram 140.

At a third step 730, sets of products linked with several similar nodes are partitioned. It is an optional step which is used for optimization and it may be discarded in another embodiment. Example embodiments for this step will be explained with reference to FIG. 8 wherein an example of similar subtrees is illustrated.

Finally, at a fourth step 740, products of subset A are added iteratively to the output planogram 140 at most until there is not room enough to add more occurrences of any product. If the number of occurrences *nₐ*(*P*) is defined for each product P in the new assortment 120, then products of subset A are added until one of the two following conditions is met for each product P:
- the number of occurrences *nₐ*(*P*) has been reached in the output planogram 140,
- there is not room enough to add more occurrences of this product.

In a possible embodiment, at step 740, the condition that there is enough room to add a product may be ignored in the case where a product must be added that is not present in the planogram (*nₚ*(*P*) = 0). In this case, at least one facing is added for each product in the new assortment 120 and possible geometrical constraints would then be enforced as a final step.

An example of iterative addition of products from subset A to the output planogram 140 will be detailed with reference to FIG. 9.

As above mentioned, FIG. 8 shows two subtrees from two different segmentation trees with three similar nodes N0, N1, N2 and N'0, N'1, N'2 respectively, i.e. *C*(*N*0) = *C*(*N'*0)*, C*(*N*1) = *C*(*N'*1) and *C*(*N*2) = *C*(*N*'2))*.* FIG. 8 further shows a set of products P1, ..., P7 that have been associated with each node. Products P1 to P7 are associated with parent nodes N0 and N'0; products P1, P2 with children nodes N1 and N'1; and products P3, P4, P5 with children nodes N2 and N'2 (shown only for the first subtree in the left part of FIG. 8). Two products P6 and P7 are associated with the parent nodes N0 and N'0 but with none of the children nodes. At step 730, the length of linear available for node N0 (respectively N'0) should be strictly bigger than the added lengths of its children N1 (respectively N'1) and N2 (respectively N'2), in order to accommodate for products P6 and P7.

As an example of partition executed at step 730, in the example of FIG. 8, there are two similar nodes N1 and N'1, which consequently have the same set of associated products *P*(*N*1) = *P*(*N'*1) = {*P*1,*P*2}. Then it is possible to partition this set so that P1 will be added to N1 only, and P2 to N'1 only, i.e. *P'*(*N*1) = {*P*1} and *P'*(*N'*1) = {*P*2}*.* The choice here is arbitrary, but in another embodiment it could be optimized using geometrical information. For nodes N2 and N'2, as there are three products to partition, it may be useful to use geometrical information from the nodes together with the widths of the products to optimize the partition.

As another example of partition executed at step 730, in the example of FIG. 8, let's take the nodes N2 and N'2, with available linear lengths of 60 and 20 respectively. Let *P*(*N2*) = *P*(*N'*2) = {*P*3,*P*4,*P*5}. Each product P has a certain width w(P) : e.g. *w*(*P*3) = 10, *w*(*P*4) = 5, *w*(*P*5) = 5. Suppose *nₐ*(*P*) is not defined for all products. Total product length with one occurrence for each product is 20. An optimum partition would give 75% of the product widths attached to node N2, and the remaining 25% attached to node N'2, following the proportions of available linear lengths. A best partition is found, e.g. *P'*(*N*2) = {*P*3,*P*4} (75%) with node N2, and *P'*(*N*'2) = {*P*5} (25%) with node N'2. With this partition, it is possible to add four occurrences of each product. Note however that this is not a partition in the mathematical sense, in that a product may still be assigned to several nodes.

The iterative addition of products (step 740) from subset A to the output planogram 140 as illustrated in FIG. 9 assumes that the number of occurrences *nₐ*(*P*) of each product P in the new assortment 120 is known.

At a first step 910, a product count *m*(*P*) = *nₐ*(*P*) - *nₚ*(*P*) is defined and initialized for each product P in the subset A.

At next step 912, a test is performed to get next product P in subset A. If there is no more product left in subset A, then stop adding products at final step 914.

Following step 912, once next product P has been selected from subset A, a test 916 is executed to see whether a next best node N for this product P is available, i.e. the next best node N such that product P belongs to P(N).

Following step 916, if no node is available for adding product P, then go to step 918 for stopping adding this product P and then go to step 912 for getting next product in subset A.

Following step 916, if a node N is available for adding product P, then go to step 920 for testing the value of product count *m*(*P*). Test 920 consists of determining whether *m*(*P*) is positive or null.

Following step 920, if *m*(*P*) is null, then go to step 918 for stopping adding this product P and then go to step 912 for getting next product in subset A.

Following step 920, if *m*(*P*) is positive, then go to step 922 for testing whether it is possible to add product P to the output planogram 140 at node N. It is possible to add product P for example if there is still some linear space available as conditioned by node N.

Following step 922, if it is not possible to add product P, then go to step 916 to determine whether another node is available for adding product P to output planogram 140.

Following step 922, if it is possible to add product P to output planogram 140 at node N, then go to step 924. At this step, use the geometrical information of node N to place the product P on a corresponding shelf, further using any optimization criteria for placement and number of facings of products on the shelves. Update the space available accordingly in node N geometrical information at next step 926.

At next step 928, decrease product count for product P by one (i.e. *m*(*P*) ← *m*(*P*) - 1) and go to step 912 for getting next product in subset A.

In case the number of occurrences *nₐ*(*P*) of each product P in the new assortment 120 is unknown, then the iterative addition (step 740) of products from subset A to the output planogram 140 may start directly at step 912. In that case too, steps 920 and 928 can be removed and step 912 can follow directly step 926.

Optionally, when placing a new product in step 740, priority may be given to nodes from lower levels when enforcing geometrical constraints. In a possible embodiment, relative positions may be used to place all the new products, moving other products already in place if necessary to avoid collisions, and a finer positioning algorithm may be used to rearrange the products where a node's geometrical constraints are violated.

Optionally also, in a possible embodiment, the method for adding products at step 740 may be simplified to add all items of a product at once, in case there is only one node available for a product, or by batches, in case there are several nodes available.

Optionally also, in another embodiment, the products may be ordered before step 740, so that products are added first to the nodes with fewest products.

It is clear that a method such as the one described previously, implemented in the system described previously, makes it possible to efficiently generate an output planogram that is suited to the specific needs of a retail store.

It will also be noted that the invention is not limited to the embodiments described previously. It will be clear to a person skilled in the art that various modifications can be made to the embodiments described above in the light of the teaching that has just been disclosed to him. In the following claims, the terms used must not be interpreted as limiting the claims to the embodiments disclosed in the present description, but must be interpreted so as to include therein all the equivalents that the claims aim to cover because of their wording and the prediction of which is within the capability of a person skilled in the art applying his general knowledge to the use of the teaching that has just been disclosed to him.

## Claims

1. A method for assigning an assortment of products to an existing planogram (130) comprising the following steps:
- providing (210) with an existing planogram (130) which includes an existing assortment of products in association with a geometrical placement layout of these products on shelves and storing (215) said existing planogram (130) in memory (114, 118),
- providing (210) with a user-defined new assortment of products (120) and storing (215) said new assortment (120) in memory (114, 118),
- furnishing, by a processor (112) which has read/write access to the memory (114, 118), an output planogram (140) by:
• removing (240), from the output planogram (140), products which are in the existing assortment but not in the new assortment (120),
• adding (250), to the output planogram (140), products which are in the new assortment (120) but not in the existing assortment,
- storing (260) said output planogram (140) in memory (114, 118), **characterized in that** the method further comprises:
- generating (220), by the processor (112), a set of at least one segmentation tree which describes the relative geometrical placement of products in the existing planogram (130) according to several ordered category types, each category type corresponding to a level (L1, L2) of said at least one segmentation tree,
- adding (250) the new products to the output planogram (140) using the generated set of at least one segmentation tree.

2. The method for assigning an assortment of products to an existing planogram (130) as claimed in claim 1, wherein adding (250) new products to the output planogram (140) using the generated set of at least one segmentation tree further uses (924) optimization criteria for placement and number of facings of products on the shelves.

3. The method for assigning an assortment of products to an existing planogram (130) as claimed in claim 1 or 2, wherein the ordered category types include at least a "segment" type which defines several geometrically segmented areas of the shelves and a "brand" type which defines several brands to which every product can be associated.

4. The method for assigning an assortment of products to an existing planogram (130) as claimed in any one of claims 1 to 3, wherein the output planogram (140) is the existing planogram (130) from which products which are in the existing assortment but not in the new assortment (120) are directly removed (240) and to which products which are in the new assortment (120) but not in the existing assortment are directly added (250).

5. The method for assigning an assortment of products to an existing planogram (130) as claimed in any one of claims 1 to 4, wherein generating (220) said at least one segmentation tree includes:
- partitioning (510) the existing planogram (130) into several groups (Gₖ), wherein each group contains one or more shelves located at the same height in the existing planogram (130),
- generating (520-570) one segmentation tree for each group.

6. The method for assigning an assortment of products to an existing planogram (130) as claimed in any one of claims 1 to 5, wherein generating (220) a segmentation tree includes creating (520) a root node that identifies this segmentation tree and iterating over the corresponding products of the existing planogram (130) as follows:
- for each product, determine the corresponding category values taken for each category type, and
- if there exists no node in the segmentation tree at any level such that this node and its ancestors are associated to at least part of the category values determined for the product, then create (560) such a new node with all necessary ancestors from the root node to complete a corresponding branch of the segmentation tree and update (570) geometrical information associated to said new node and its ancestors,
- else, update (570) geometrical information associated to said associated node and its ancestors.

7. The method for assigning an assortment of products to an existing planogram (130) as claimed in claim 6, wherein geometrical information is updated (570) using placement data of the product, such as the identification of the shelf on which the product is placed, the position of the product on this shelf and the length of linear the product occupies.

8. The method for assigning an assortment of products to an existing planogram (130) as claimed in claim 6 or 7, wherein adding (250) the new products to the output planogram (140) using the generated set of at least one segmentation tree includes:
- creating (710) a subset of products in the new assortment (120) but not in the existing assortment of existing planogram (130),
- associating (710) each product of the subset to all nodes of any segmentation tree with compatible category values, and
- iteratively adding (740) each product of the subset to the output planogram (140) in association with an available node and updating geometrical information associated with said available node.

9. A system (100) for assigning an assortment of products to an existing planogram (130) comprising:
- a memory (114, 118) for storing:
• an existing planogram (130) which includes an existing assortment of products in association with a geometrical placement layout of these products on shelves,
• a user-defined new assortment of products (120), and
• an output planogram (140);
- a processor (112) which has read/write access to the memory (114, 118) for furnishing the output planogram (140) by:
• removing, from the output planogram (140), products which are in the existing assortment but not in the new assortment (120),
• adding, to the output planogram (140), products which are in the new assortment (120) but not in the existing assortment, **characterized in that** the processor (112) has read/write access to the memory (114, 118) for further:
- generating a set of at least one segmentation tree which describes the relative geometrical placement of products in the existing planogram (130) according to several ordered category types, each category type corresponding to a level (L1, L2) of said at least one segmentation tree,
- adding the new products to the output planogram (140) using the generated set of at least one segmentation tree.

10. A computer program that can be downloaded from a communication network and/or saved on a computer-readable medium (114) and/or executed by a processor (112), said program comprising program code instructions (116A, 116B, 116C, 116D, 116E) for the execution of the steps of a method for assigning an assortment of products to an existing planogram (130) as claimed in any one of claims 1 to 8 when said program is executed on a computer (110).
